# EUROPÄISCHE PATENTSCHRIFT

(11) **EP 0 705 780 B1**
(45) Veröffentlichungstag und Bekanntmachung des Hinweises auf die Patenterteilung: **31.01.2001**
(21) Anmeldenummer: 95115654.6
(22) Anmeldetag: 04.10.1995
(51) Int. Cl.: B65H 1/04, B65H 3/30, B65H 3/32, B65H 29/00, B65H 31/08, B65H 33/06

(54) **Vorrichtung und Verfahren zur Vereinzelung von in einem Kartenstapel vorliegende Karten und zum Stapeln von Karten**
Device and method for separating cards from a pile of cards and for stacking cards
Dispositif et procédé pour séparer de cartes d'une pile de cartes et pour empiler de cartes

(30) Priorität: 07.10.1994 DE 4435921
(43) Veröffentlichungstag der Anmeldung: 10.04.1996
(73) Patentinhaber: Giesecke & Devrient GmbH, 81677 München (DE)
(72) Erfinder: Hohmann, Arno, D-81369 München (DE); Hoppe, Joachim, D-81667 München (DE)
(74) Vertreter: Klunker . Schmitt-Nilson . Hirsch

(56) Entgegenhaltungen:
- DE-A- 3 814 075
- GB-A- 2 066 219
- US-A- 4 013 193
- US-A- 4 318 539
- US-A- 4 354 787
- US-A- 5 048 811

## Beschreibung

Die Erfindung betrifft ein Verfahren und eine Vorrichtung zur Vereinzelung von Karten, wie z.B. Kreditkarten oder Scheckkarten und dergleichen sowie Verfahren und Vorrichtungen zum Stapeln von Karten.

Bekannte Vereinzelungsvorrichtungen bestehen üblicherweise aus einem Magazin, in dem der Kartenstapel untergebracht ist. Für den Fall, daß der Kartenstapel von oben abgearbeitet werden soll, ist eine Entnahmeeinrichtung vorgesehen, die jeweils die oberste Karte aus dem Magazin ergreift und sie an ein Transportsystem oder eine andere weiterverarbeitenden Einrichtung übergibt. Die bekannten Vereinzelungsvorrichtungen besitzen ferner Rückhalteeinrichtungen, die die der obersten Karte nachfolgenden Karten im Magazin zurückhalten.

Derartige Vereinzelungsvorrichtungen sind aus dem Stand der Technik bekannt. Verwiesen wird in diesem Zusammenhang z.B. auf die DE-OS 38 14 075.

In dieser Druckschrift sind die Karten formschlüssig übereinander in einem Magazin abgelegt. Die Karten werden mit Hilfe einer Rückhalteeinrichtung in Form eines am oberen Ende des Kartenmagazins befindlichen Anschlages im Kartenmagazin gehalten. Die jeweils oberste Karte wird mit Hilfe einer Entnahmeeinrichtung, beispielsweise einem getaktet gesteuerten Saugkopf, in eine Vereinzelungsnut bewegt. Dadurch gelangt die oberste Karte aus dem Bereich des Anschlages, der den Kartenstapel zurückhält, so daß die Karte dann mittels des Saugkopfes vom Kartenstapel abgehoben werden kann.

Bei Karten mit erhabenen Bereichen, wie z.B. Prägungen, ist es möglich, daß der Kartenstapel im Magazin verkantet. Als Folge davon kann die oberste Karte schräg liegen und nicht vollständig in die Vereinzelungsnut eingeführt werden, so daß es zu Störungen in der Vereinzelung kommen kann.

Für die Durchführung der in der Patentschrift US 5,048,811 vorgeschlagenen Vereinzelungsmethode müssen die von einem Stapel zu vereinzelnden Gegenstände Aussparungen aufweisen. Außerdem sind zusätzliche Zwischenlagen erforderlich, die ebenfalls vereinzelt werden müssen.

Aus der US 4,354,787 ist eine Ablagevorrichtung für Mikrofilme bekannt, bei der ein Ablageschacht jeweils nach der Zufuhr mehrerer Filme gedreht wird, um kreuzförmig liegende Bündel von rechteckigen, nicht quadratischen Filmen zu bilden, die von Hand entnommen werden.

Der Erfindung liegt die Aufgabe zugrunde, eine Vorrichtung und ein Verfahren zum Stapeln und zur Vereinzelung von Karten, wie Ausweiskarten, Scheckkarten und dergleichen vorzuschlagen, bei der die Zuverlässigkeit bei der Vereinzelung verbessert und eine schonende Behandlung der Karten gewährleistet wird.

Erfindungsgemäß wird die Aufgabe durch die in den unabhängigen Ansprüchen angegebenen Merkmale gelöst. Vorteilhafte Weiterbildungen sind Gegenstand der Unteransprüche.

Der Grundgedanke der Erfindung besteht darin, daß die Karten beim Befüllen des Magazins in einem definierten Winkel, der kleiner als 90° ist, gegeneinander verdreht angeordnet werden. So entstehen zwischen zwei aufeinanderfolgenden Karten vorstehende Flächen, mit denen die Rückhalteeinrichtung zusammenwirkt. Die oberste Karte des Kartenstapels wird dann mittels einer Entnahmeeinrichtung senkrecht vom Stapel abgehoben.

Die Vorteile der erfindungsgemäßen Lösung bestehen darin, daß zum einen die Rückhalteeinrichtung auf eine relativ große Fläche einwirken kann, so daß die nachfolgenden Karten einfach und sicher zurückgehalten werden. Hieraus resultiert eine sehr hohe Zuverlässigkeit bei der Vereinzelung. Ferner wird dadurch, daß die oberste Karte senkrecht vom Stapel abgehoben wird, eine Beschädigung der Karte z.B. durch Reibung mit der nachfolgenden Karte ausgeschlossen. Weiterhin muß die zu vereinzelnde Karte im Unterschied zum Stand der Technik nicht gegen Anschläge gepreßt werden, so daß auch schräg liegende Karten problemlos vereinzelt werden können.

Gemäß einer bevorzugten Ausführungsform wird die oberste Karte mittels eines Saugkopfes vom Kartenstapel abgehoben und durch eine Scheibe mit einer Öffnung in Form einer Blende geführt, die in ihren Abmaßen und ihrer Positionierung der obersten Karte angepaßt ist. Sollten mehrere Karten aneinanderhaften, wird die der obersten Karte nachfolgende Karte von der Blende zurückgehalten und fällt zurück in das Magazin. Zur Vereinzelung dieser Karte, die in einem definierten Winkel gegenüber der obersten Karte verdreht ist, wird die Lage der Blende entsprechend der Position dieser Karte nachgeführt.

In einer weiteren Ausführungsform besteht die Rückhalteeinrichtung aus einer rechteckigen Platte mit an den Eckpunkten befestigten Ständern bzw. Füßen in Form einer Brücke, in deren Mitte ein vertikal bewegbarer Saugkopf vorgesehen ist. Zur Vereinzelung wird zunächst die Brücke in eine Position gebracht, in der sie die oberste Karte überspannt. Der Saugkopf wird auf die oberste Karte abgesenkt und saugt diese an. Durch eine Relativbewegung zwischen Brücke und Saugkopf wird nun die oberste Karte in die Brücke hineinbewegt, wobei die nachfolgende Karte von den Brückenfüßen zurückgehalten wird.

Gemäß einer weiteren Ausführungsform können als Rückhalteeinrichtung auch diagonal angeordnete Schieber über dem Magazin eingefahren werden, die auf die vorstehenden Flächen der nachfolgenden Karte wirken und dadurch wird beim Abheben der obersten Karte durch den Saugkopf die nachfolgende Karte zurückgehalten.

Selbstverständlich können die oben beschriebenen Ausführungsformen auch für Kartengruppen verwendet werden, die aus einer Anzahl von Karten bestehen, die im gleichen Winkel, also formschlüssig, jedoch untereinander verdreht im Kartenmagazin angeordnet sind. Lediglich der Saugkopf muß hierbei durch einen entsprechenden Greifer ersetzt werden, der so ausgestaltet ist, daß er die oberste Kartengruppe erfaßt und an eine weiterverarbeitende Einheit übergibt. Die Rückhalteeinrichtung wirkt hier auf die vorstehenden Flächen der nächsten Kartengruppe.

In einer Weiterbildung der Erfindung ist es auch möglich, die Höhe des Kartenstapels im Kartenmagazin durch einen Kartenlift einzustellen, der mittels eines Höhensensors bestehend aus zwei Lichtschranken gesteuert wird.

Weiterhin ist es möglich, einzelne Karten oder Kartengruppen mittels geeigneter Stapelvorrichtungen automatisch abzulegen, so daß diese in einem definierten Winkel gegeneinander verdreht angeordnet sind.

Nachfolgend werden Ausführungsformen der Erfindung anhand der Figuren beschrieben. Darin zeigen:
- Fig. 1: eine Aufsicht auf eine Vereinzelungsvorrichtung mit einer Blende als Rückhalteeinrichtung,
- Fig. 2: eine Seitenansicht der Vereinzelungsvorrichtung in Fig. 1,
- Fig. 3 und 4: unterschiedliche Ausführungsformen des Kartenmagazins,
- Fig. 5: eine Aufsicht auf eine Vereinzelungsvorrichtung mit einer Brücke,
- Fig. 6 und 7: eine Seitenansicht der Vereinzelungsvorrichtung in Fig. 2,
- Fig. 8: eine Aufsicht auf eine Vereinzelungsvorrichtung mit Zapfen als Rückhalteeinrichtung,
- Fig. 9: die schematische Darstellung eines Greifers für Paketstapel,
- Fig. 10: die schematische Darstellung einer Transportstrecke zum Füllen des Kartenmagazins und
- Fig. 11: die schematische Darstellung einer Ausführungsform zum Füllen des Kartenmagazins mit Drehtisch.

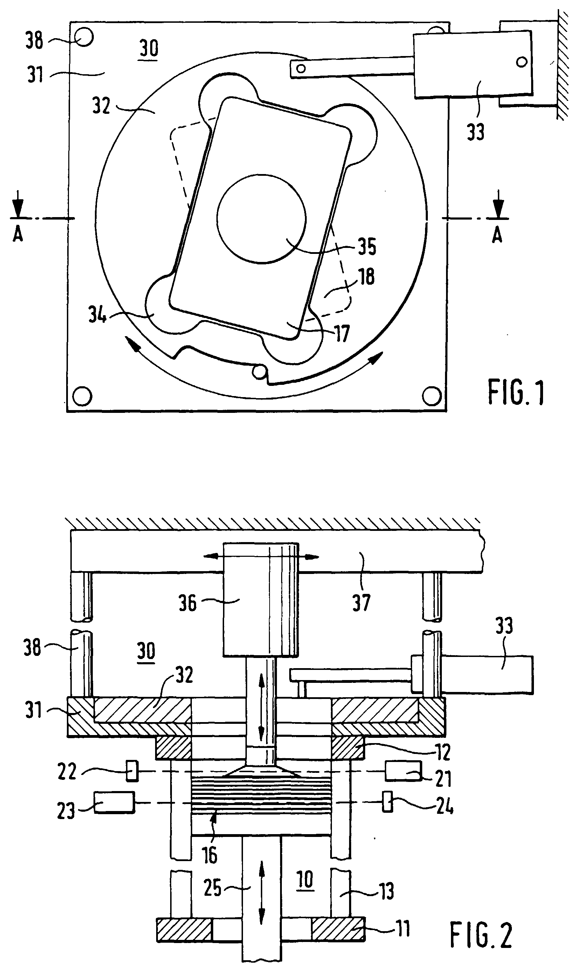

Fig. 1 und 2 zeigen eine Aufsicht sowie eine Seitenansicht einer Vereinzelungsvorrichtung mit einer Blende als Rückhalteeinrichtung.

Der hier schematisch dargestellte Vereinzeler 30 besteht aus einem Vereinzelerboden 31, in dem eine Blende 32 drehbar gelagert angeordnet ist. Die Blende 32 läßt sich mittels des Schwenkzylinders 33 bewegen. Die Blende 32 ist mit einer Blendenöffnung 34 versehen, die im wesentlichen der Form der zu vereinzelnden Karte entspricht.

Die Entnahmeeinrichtung besteht in diesem Ausführungsbeispiel aus einem Saugkopf 35, der mittels eines Hubzylinders 36 in einer Achse senkrecht zur Kartenfläche aufwärts und abwärts bewegt werden kann. Die Linearführung 37 ist mit einem Gestänge 38 am Vereinzelerboden 31 befestigt und dient dazu, den Saugkopf 35 einschließlich des Hubzylinders 36 in einer Ebene parallel zur Kartenfläche hin und her zu bewegen.

Der Vereinzeler 30 befindet sich oberhalb eines Kartenmagazins 10. Dieses Kartenmagazin 10 besteht aus einem Magazinboden 11, einem Magazindeckel 12 und den Magazinwänden 13. Innerhalb des Kartenmagazins 10 befindet sich ein Kartenstapel 16, von dem mittels des Saugkopfes 35 vereinzelt wird. Die Karten des Kartenstapels 16 sind gegeneinander verdreht abgelegt, so daß sich jeweils zwischen zwei aufeinanderfolgenden Karten vorstehende Flächen bilden.

Um den Kartenstapel 16 im Kartenmagazin 10 exakt positionieren zu können, ist eine Höhenregulierung 20 vorgesehen. Diese besteht aus zwei Lichtschranken, wobei die erste aus dem Sender 21 und dem Empfänger 22 besteht und die zweite aus dem Sender 23 und dem Empfänger 24. Unter dem Kartenstapel 16 ist ein Kartenlift 25 vorgesehen, der mit Hilfe der Signale der beiden Lichtschranken so gesteuert werden kann, daß die Oberkante des Kartenstapels 16 sich immer in einer definierten Höhe zwischen den Lichtschranken befindet.

Vor der eigentlichen Vereinzelung der obersten Karte 17 des Kartenstapels 16 wird nun zunächst der Kartenstapel 16 mittels des Kartenlifts 25 so positioniert, daß sich die oberste Karte 17 des Kartenstapels 16 unterhalb der oberen Lichtschranke und oberhalb der unteren Lichtschranke befindet. Melden im Anfangszustand beide Lichtschranken "dunkel", ist der Kartenstapel 16 zu hoch und muß durch den Kartenlift 25 so lange abgesenkt werden, bis die obere Lichtschranke "hell" meldet. Melden beide Lichtschranken "hell", ist der Kartenstapel zu niedrig und muß mit dem Kartenlift 25 so lange angehoben werden, bis die untere Lichtschranke "dunkel" meldet. Im Endzustand meldet somit die obere Lichtschranke "hell" und die untere Lichtschranke "dunkel" und die oberste Karte 17 befindet sich zwischen der oberen und der unteren Lichtschranke.

Zur Vereinzelung der obersten Karte 17 wird mit Hilfe des Schwenkzylinders 33 die Blende 32 in eine Position gebracht, in der die Blendenöffnung 34 formschlüssig zur obersten Karte 17 ist und somit ein freier Zugriff auf die oberste Karte 17 entsteht. Der Saugkopf 35 kann nun mittels des Hubzylinders 36 durch die Blendenöffnung 34 gefahren werden, bis er in Kontakt mit der obersten Karte 17 kommt und diese vom Saugkopf 35 angesaugt wird. Mittels des Hubzylinders 36 wird der Saugkopf 35 mit der obersten Karte 17 senkrecht von der nachfolgenden Karte 18 abgehoben und durch die Blendenöffnung 34 vereinzelt.

Sollte die nachfolgende Karte 18 aufgrund von Schmutz oder elektrostatischer Aufladung an der obersten Karte 17 haften, so wird diese beim Durchtritt durch die Blendenöffnung 34 von der Blende 32 zurückgehalten. Hierbei wirkt die Blende 32 auf die vorstehenden Flächen der nachfolgenden Karte 18. Es ist somit gewährleistet, daß nur die oberste Karte 17 durch die Blendenöffnung 34 vereinzelt werden kann. Durch ein Zusammenwirken der Linearführung 37 und des Hubzylinders 36 kann nun die oberste Karte 17 einer weiterverarbeitenden Einheit zugeführt werden.

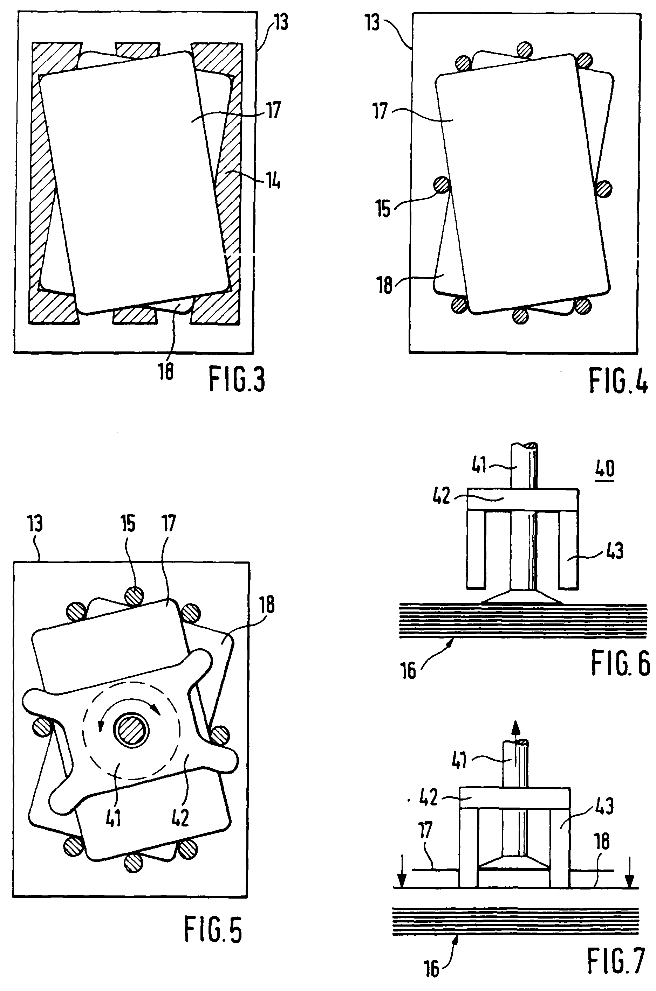

Die Fig. 3 und 4 zeigen unterschiedliche Ausführungsformen eines Kartenmagazins 10. Für eine fehlerfreie Vereinzelung ist es notwendig, daß die Karten gegeneinander verdreht im Kartenmagazin angeordnet sind. Um die Karten in diesen Positionen zu fixieren, sind im Kartenmagazin 10 unterschiedliche Fixierungsmittel vorgesehen. Die Fig. 3 zeigt einen Fixierungsrahmen 14, in den Nuten eingelassen sind, so daß eine lagefixierte Anordnung der Karten in zwei Positionen gewährleistet ist. Die Fig. 4 zeigt eine Ausführungsform, bei der die Fixierungsmittel aus einem Fixierungsgestänge 15 bestehen. Das Fixierungsgestänge 15 erfüllt die gleichen Aufgaben wie der Fixierungsrahmen 14, stellt jedoch eine kostengünstigere Variante dar.

Fig. 5 bis 7 zeigen eine weitere Ausführungsform eines Vereinzelers. Der hier gezeigte Vereinzeler 40 besteht aus einer die oberste Karte 17 überspannenden Brücke 42 mit vier Brückenfüßen 43. In der Mitte ist die Brücke 42 an einem drehbaren Saugkopf 41 befestigt, der z.B. gemäß der ersten Ausführungsform bewegt werden kann. Zur Vereinzelung wird nun die Brücke 42 oberhalb des Kartenmagazins 10 so gedreht, daß sie die oberste Karte 17 überspannt.

Fig. 6 zeigt in einer Seitenansicht, wie der Saugkopf 41 auf die oberste Karte 17 aufsetzt und diese ansaugt. Die Brücke 42 ist dabei oberhalb des Kartenstapels 16. Zur eigentlichen Vereinzelung wird, wie in Fig. 7 gezeigt, der Saugkopf 41 relativ zur Brücke 42 nach oben bewegt, so daß die oberste Karte 17 zwischen die Brückenfüße 43 gelangt.

Sollte nun die nachfolgende Karte 18 an der obersten Karte 17 haften, drücken die Brückenfüße 43 auf die vorstehenden Flächen der nachfolgenden Karte 18, so daß diese von der obersten Karte 17 getrennt wird und in das Magazin zurückfällt. Die vereinzelte oberste Karte 17 kann nun z.B. gemäß der ersten Ausführungsform an eine weiterverarbeitende Einheit übergeben werden.

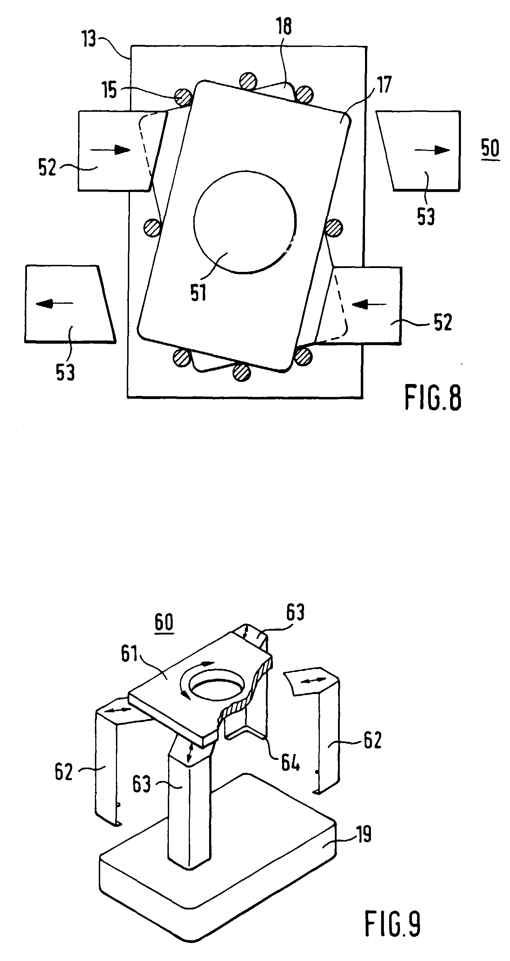

Die Fig. 8 zeigt eine weitere Ausführungsform der Vereinzelungsvorrichtung. Der Vereinzeler 50 besteht aus einem Saugkopf 51 und zwei diagonal angeordneten Schieberpaaren 52 und 53, die alternierend über dem Magazin ein- oder ausgefahren werden können.

Zur Vereinzelung der obersten Karte 17 wird nun zunächst das Schieberpaar 52 über dem Magazin hineingefahren, so daß die hervorstehenden Flächen der nachfolgenden Karte 18 überdeckt werden. Danach wird die oberste Karte 17 vom Saugkopf 51 ergriffen und senkrecht vom Kartenstapel abgehoben.

Sollte die nachfolgende Karte 18 an der obersten Karte 17 haften, stoßen deren vorstehende Flächen unter die Schieber 52 und die Karte 18 wird von ihnen zurückgehalten. Die vereinzelte oberste Karte 17 wird dann wiederum einer weiterverarbeitenden Einheit zugeführt. Zur Vereinzelung der nachfolgenden Karte 18 werden dann die Schieber 52 ausgefahren und die Schieber 53 eingefahren, so daß nun die nachfolgende Karte 18 frei zugänglich ist.

Bei den bisher beschriebenen Ausführungsformen wird vorzugsweise ein Saugkopf verwendet, der bauartbedingt nur auf die oberste Karte 17 des Kartenstapels 16 wirken kann. Sollen nicht nur einzelne Karten, sondern mehrere zu einer Gruppe zusammengefaßte Karten vereinzelt werden, so ist es vorteilhaft an Stelle des Saugkopfes einen Greifer zu verwenden, der in der Lage ist, eine solche Kartengruppe sicher zu ergreifen und zu transportieren.

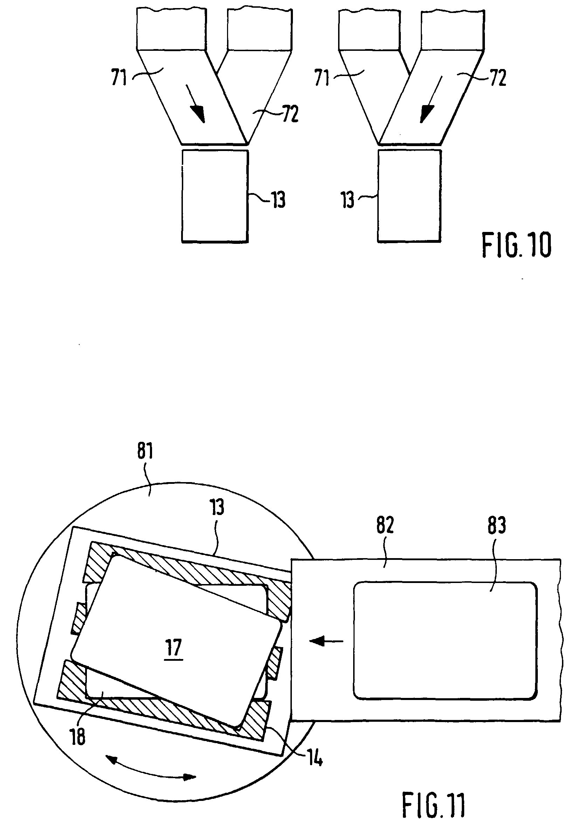

Die Fig. 9 zeigt eine Ausführungsform eines solchen Greifers 60. Dieser besteht aus einer Greiferplatte 61 und zwei Greiferpaaren 62 und 63, die sich alternierend oder gemeinsam öffnen oder schließen lassen.

Zum Ergreifen der Kartengruppe 19 werden zunächst beide Greiferpaare 62 und 63 geöffnet und der Greifer so weit abgesenkt, daß sich die Greifernasen 64 unterhalb der Kartengruppe befinden. Danach werden entweder ein Greiferpaar oder beide Greiferpaare gleichzeitig geschlossen und die Kartengruppe 19 vom Kartenstapel 16 abgehoben.

Die zuvor beschriebenen Ausführungformen der Vereinzler können selbstverständlich auch hier eingesetzt werden, indem man den Saugkopf einfach durch einen entsprechenden Greifer ersetzt. Hierbei können bedingt durch die Abmessungen des Greifers Platzprobleme auftreten, die durch geringfügige bauliche Änderungen an der jeweiligen Ausführungsform des Vereinzlers behoben werden können. In der ersten Ausführungsform kann z.B. die Form der Blendenöffnung 34 durch das Einbringen zusätzlicher Nuten so verändert werden, daß auch ein Greifer in geöffneter Position durch die Blendenöffnung geführt werden kann.

Wie schon ausgeführt wurde, ist es zur Vereinzelung der einzelnen Karten bzw. der Kartengruppen notwendig, daß diese gegeneinander verdreht im Kartenmagazin angeordnet sind. Um eine solche Anordnung auf einfache Weise zu erreichen, ist es vorteilhaft die einzelnen Karten bzw. Kartengruppen mittels einer entsprechenden Stapelvorrichtung in einem erfindungsgemäßen Magazin automatisch abzulegen.

In einer hier nicht dargestellten Ausführungsform einer solchen Stapelvorrichtung werden die Karten bzw. Kartengruppen mittels einer beweglichen, drehbaren Ablageeinrichtung ergriffen und in eine Position oberhalb des Kartenmagazins gebracht werden. Durch eine entsprechende Drehung der Abnahmeeinrichtung wird die Karte in die gewünschte Ablageposition gebracht und kann nun senkrecht von der Ablageeinrichtung im Kartenmagazin abgelegt werden. Als Ablageeinrichtungen können hier z.B. ein drehbarer Saugkopf oder ein Greifer benutzt werden, wie sie schon oben beschrieben wurden.

Die Fig. 10 zeigt eine Ausführungsform, bei der die Karten auf zwei Transportstrecken 71 und 72 angeliefert werden. Die Transportstrecken 71 und 72 stehen dabei in einem definierten Winkel zu einander, der dem jeweiligen Drehwinkel der Karten im Kartenmagazin entspricht. Die Karten können somit direkt von der jeweiligen Transportstrecke in das Magazin eingebracht werden.

Eine weitere Ausführungsform zeigt die Fig. 11. Das Kartenmagazin 10 ist hierbei auf einem Drehtisch 81 befestigt. Durch eine entsprechende Drehung des Drehtisches 81 kann der zur Ablage der neuen Karte 83 gewünschte Winkel eingestellt werden. Mittels der Transportstrecke 82 kann somit die neue Karte 83 direkt dem Kartenmagazin 10 zugeführt werden.

## Patentansprüche

1. Vorrichtung zur Vereinzelung von Karten, wie z.B. Kreditkarten oder Scheckkarten, umfassend mindestens ein Magazin zur Aufbewahrung von Karten in einem Kartenstapel, eine Entnahmeeinrichtung und eine Rückhalteeinrichtung, dadurch **gekennzeichnet**, daß
- das Magazin (10) Mittel (14,15) aufweist die eine lagefixierte Anordnung der Karten im Magazin (10) derart gewährleisten, daß die Karten einzeln oder in Kartengruppen im Magazin (10) in einem definierten Winkel, der kleiner als 90° ist, gegeneinander verdreht sind, so daß sich zwischen zwei aufeinanderfolgenden Karten oder Kartengruppen vorstehende Flächen ergeben,
- die Entnahmeeinrichtung (35,60) die jeweils oberste Karte (17) oder Kartengruppe vom Kartenstapel (16) in einer Achse senkrecht zur Kartenfläche abhebt und
- die Rückhalteeinrichtung (30,40,50) derart ausgebildet ist, daß sie zumindest während der Vereinzelung auf die vorstehenden Flächen der nachfolgenden Karte bzw. Kartengruppe wirkt.

2. Vorrichtung nach Anspruch 1, dadurch **gekennzeichnet**, daß die Rückhalteeinrichtung (30) eine drehbare Blende (32) mit einer Öffnung (34) ist, wobei die Öffnung (34) im wesentlichen den Abmessungen der Karte (17) entspricht.

3. Vorrichtung nach Anspruch 1, dadurch **gekennzeichnet**, daß die Rückhalteeinrichtung (40) eine drehbare Brücke (42) mit Brückenfüßen (43) ist die an der Entnahmeeinrichtung (35,60) befestigt ist.

4. Vorrichtung nach Anspruch 1, dadurch **gekennzeichnet**, daß die Rückhalteeinrichtung (50) zwei diagonal angeordnete Schieberpaare (52,53) aufweist, die alternierend über dem Magazin (10) ein- bzw. ausgefahren werden.

5. Vorrichtung nach einem der Ansprüche 1 bis 4, dadurch **gekennzeichnet**, daß die Entnahmeeinrichtung aus einem Saugkopf (35) besteht.

6. Vorrichtung nach einem der Ansprüche 1 bis 4, dadurch **gekennzeichnet**, daß die Entnahmeeinrichtung aus einem Greifer (60) besteht.

7. Vorrichtung nach Anspruch 1, dadurch **gekennzeichnet**, daß das Magazins als Mittel zur lagefixierten Anordnung der Karten einen Fixierungsrahmen (14) mit eingelassenen Nuten aufweist.

8. Vorrichtung nach Anspruch 1, dadurch **gekennzeichnet**, daß das Magazin als Mittel zur lagefixierten Anordnung der Karten ein Fixierungsgestänge (15) aufweist.

9. Vorrichtung nach einem der Ansprüche 1-8, dadurch **gekennzeichnet**, daß ein Kartenlift (25) und ein Höhensensor zur Bestimmung der Oberkante des Kartenstapels (16) vorgesehen sind, wobei der Höhensensor aus zwei Lichtschranken besteht, von denen eine Lichtschranke (21,22) oberhalb der gewünschten Höhe des Kartenstapels (16) und eine Lichtschranke (23,24) unterhalb angebracht ist.

10. Vorrichtung zur Stapelung von Karten in einem Magazin, dadurch **gekennzeichnet**,
- daß das Magazin (10) Mittel (14,15) aufweist, die eine lagefixierte Anordnung der Karten im Magazin (10) derart gewährleisten, daß die Karten einzeln oder in Kartengruppen im Magazin (10) in einem definierten Winkel, der kleiner als 90° ist, gegeneinander verdreht sind, so daß sich zwischen zwei aufeinanderfolgenden Karten oder Kartengruppen vorstehende Flächen ergeben und
- daß eine Ablageeinrichtung vorgesehen ist die in einer Achse senkrecht zur Kartenfläche bewegbar und um diese Achse drehbar ist.

11. Vorrichtung zur Stapelung von Karten in einem Magazin, dadurch **gekennzeichnet**,
- daß das Magazin (10) Mittel (14,15) aufweist, die eine lagefixierte Anordnung der Karten im Magazin (10) derart gewährleisten, daß die Karten einzeln oder in Kartengruppen im Magazin (10) in einem definierten Winkel, der kleiner als 90° ist, gegeneinander verdreht sind, so daß sich zwischen zwei aufeinanderfolgenden Karten oder Kartengruppen vorstehende Flächen ergeben und
- daß zwei Transportstrecken (71,72) vorgesehen sind, die in einem definierten Winkel zum Magazin (10) angeordnet sind, der dem Winkel der Karten im Magazin (10) entspricht.

12. Verfahren zum Vereinzeln von Karten bzw. Kartengruppen aus einem Magazin, das Mittel (14,15) aufweist, die eine lagefixierte Anordnung der Karten im Magazin (10) derart gewährleisten, daß die Karten einzeln oder in Kartengruppen im Magazin (10) in einem definierten Winkel, der kleiner als 90° ist, gegeneinander verdreht sind, so daß sich zwischen zwei aufeinanderfolgenden Karten oder Kartengruppen vorstehende Flächen ergeben, bei dem die folgenden Schritte durchgeführt werden:
- Bewegen der Entnahmeeinrichtung (35,60) in eine Positionen oberhalb des Magazins (10),
- Bewegen der Rückhalteeinrichtung (30,40,50) in eine von mindestens zwei möglichen Positionen, wobei die Entnahmeeinrichtung (35, 60) in dieser Position einen freien Zugriff auf die zu vereinzelnde Karte (17) bzw. Kartengruppe im Magazin (10) hat,
- Ergreifen der Karte (17) bzw. Kartengruppe durch die Entnahmeeinrichtung (35,60),
- senkrechtes Abheben der Karte (17) bzw. Kartengruppe durch die Entnahmeeinrichtung (35,60),
- Zurückhalten der nachfolgenden Karte (18) bzw. Kartengruppe durch Einwirken der Rückhalteeinrichtung (30,40,50) auf die vorstehenden Flächen der nachfolgenden Karte (18) bzw. Kartengruppe,
- Transportieren der Karte (18) bzw. Kartengruppe durch die Entnahmeeinrichtung (35,60) zu einer weiterverarbeitenden Einrichtung.

13. Verfahren zum Stapeln einer Karte bzw. Kartengruppe in ein Magazin, das Mittel (14,15) aufweist, die eine lagefixierte Anordnung der Karten im Magazin (10) derart gewährleisten, daß die Karten einzeln oder in Kartengruppen im Magazin (10) in einem definierten Winkel, der kleiner als 90° ist, gegeneinander verdreht sind, so daß sich zwischen zwei aufeinanderfolgenden Karten oder Kartengruppen vorstehende Flächen ergeben, bei dem die folgenden Schritte durchgeführt werden:
- Ergreifen der Karte (17) bzw. Kartengruppe durch eine Ablageeinrichtung,
- Transport der Karte (17) bzw. Kartengruppe durch die Ablageeinrichtung in eine Position über dem Magazin (10),
- Drehen der Karte (17) bzw. Kartengruppe in die gewünschte Ablageposition,
- senkrechtes Ablegen der Karte (17) bzw. Kartengruppe in das Magazin (10).

14. Verfahren zum Stapeln von Karten bzw. Kartengruppen, die von einem Transportsystem antransportiert werden, in ein Magazin, das Mittel (14,15) aufweist, die eine lagefixierte Anordnung der Karten im Magazin (10) derart gewährleisten, daß die Karten einzeln oder in Kartengruppen im Magazin (10) in einem definierten Winkel, der kleiner als 90° ist, gegeneinander verdreht sind, so daß sich zwischen zwei aufeinanderfolgenden Karten oder Kartengruppen vorstehende Flächen ergeben, bei dem die folgenden Schritte durchgeführt werden:
- Aufteilen der Karten bzw. Kartengruppen auf zwei Transportstrecken (71,72), die jeweils unter einem definierten Winkel in das Magazin (10) münden, der dem Winkel der Karten im Magazin (10) entspricht,
- Transport der Karten bzw. Kartengruppen durch die Transportstrecken in das Magazin (10).

15. Verfahren zum Stapeln einer Karte bzw. Kartengruppe, die von einem Transportsystem antransportiert werden, in ein Magazin, das Mittel (14,15) aufweist, die eine lagefixierte Anordnung der Karten im Magazin (10) derart gewährleisten, daß die Karten einzeln oder in Kartengruppen im Magazin (10) in einem definierten Winkel, der kleiner als 90° ist, gegeneinander verdreht sind, so daß sich zwischen zwei aufeinanderfolgenden Karten oder Kartengruppen vorstehende Flächen ergeben, bei dem die folgenden Schritte durchgeführt werden:
- Drehen des Magazins (10) in die gewünschte Ablageposition um einen Winkel kleiner als 90°,
- Transport der Karte (83) bzw. Kartengruppe durch das Transportsystem (82) in das Magazin.

## Claims

1. An apparatus for singling cards, such as credit cards or check cards, comprising at least a magazine for storing cards in a card stack, a removing device and a retaining device, characterized in that
- the magazine (10) has means (14, 15) for guaranteeing a positionally fixed arrangement of the cards in the magazine (10) in such a way that the cards are rotated at a defined angle smaller than 90° from one another in the magazine (10) individually or in card groups, resulting in protruding surfaces between two successive cards or card groups,
- the removing device (35, 60) removes the uppermost card (17) or card group from the card stack (16) in an axis perpendicular to the card surface, and
- the retaining device (30, 40, 50) is formed in such a way that it acts on the protruding surfaces of the following card or card group at least during singling.

2. The apparatus of claim 1, characterized in that the retaining device (30) is a rotatable diaphragm (32) with an aperture (34), the aperture (34) corresponding substantially to the dimensions of the card (17).

3. The apparatus of claim 1, characterized in that the retaining device (40) is a rotatable bridge (42) with feet (43) which is fastened to the removing device (35, 60).

4. The apparatus of claim 1, characterized in that the retaining device (50) has two diagonally disposed pairs of slides (52, 53) which are alternatingly moved in and out above the magazine (10).

5. The apparatus of any of claims 1 to 4, characterized in that the removing device consists of a suction head (35).

6. The apparatus of any of claims 1 to 4, characterized in that the removing device consists of a gripper (60).

7. The apparatus of claim 1, characterized in that the magazine has a fixing frame (14) with let-in grooves as means for positionally fixed arrangement of the cards.

8. The apparatus of claim 1, characterized in that the magazine has a fixing rod assembly (15) as means for positionally fixed arrangement of the cards.

9. The apparatus of any of claim 1 to 8, characterized in that a card elevator (25) and a height sensor for determining the upper edge of the card stack (16) are provided, the height sensor consisting of two light barriers, one light barrier (21, 22) being mounted above the desired height of the card stack (16) and one light barrier (23, 24) therebelow.

10. An apparatus for stacking cards in a magazine, characterized in that
- the magazine (10) has means (14, 15) for guaranteeing a positionally fixed arrangement of the cards in the magazine (10) in such a way that the cards are rotated at a defined angle smaller than 90° from one another in the magazine (10) individually or in card groups, resulting in protruding surfaces between two successive cards or card groups, and
- a depositing device is provided which is movable in an axis perpendicular to the card surface and rotatable around said axis.

11. An apparatus for stacking cards in a magazine, characterized in that
- the magazine (10) has means (14, 15) for guaranteeing a positionally fixed arrangement of the cards in the magazine (10) in such a way that the cards are rotated at a defined angle smaller than 90° from one another in the magazine (10) individually or in card groups, resulting in protruding surfaces between two successive cards or card groups, and
- two transport paths (71, 72) are provided which are disposed at a defined angle to the magazine (10) which corresponds to the angle of the cards in the magazine (10).

12. A method for singling cards or card groups from a magazine having means (14, 15) for guaranteeing a positionally fixed arrangement of the cards in the magazine (10) in such a way that the cards are rotated at a defined angle smaller than 90° from one another in the magazine (10) individually or in card groups, resulting in protruding surfaces between two successive cards or card groups, wherein the following steps are performed:
- moving the removing device (35, 60) into a position above the magazine (10),
- moving the retaining device (30, 40, 50) into one of at least two possible positions, the removing device (35, 60) having in said position free access to the card (17) or card group to be singled in the magazine (10),
- gripping the card (17) or card group by means of the removing device (35, 60),
- vertically lifting off the card (17) or card group by means of the removing device (35, 60),
- retaining the following card (18) or card group by the action of the retaining device (30, 40, 50) on the protruding surfaces of the following card (18) or card group,
- transporting the card (18) or card group by means of the removing device (35, 60) to a further-processing device.

13. A method for stacking a card or card group in a magazine having means (14, 15) for guaranteeing a positionally fixed arrangement of the cards in the magazine (10) in such a way that the cards are rotated at a defined angle smaller than 90° from one another in the magazine (10) individually or in card groups, resulting in protruding surfaces between two successive cards or card groups, wherein the following steps are performed:
- gripping the card (17) or card group by means of a depositing device,
- transporting the card (17) or card group by means of the depositing device into a position above the magazine (10),
- rotating the card (17) or card group into the desired position for deposit,
- vertically depositing the card (17) or card group in the magazine (10).

14. A method for stacking cards or card groups delivered by a transport system in a magazine having means (14, 15) for guaranteeing a positionally fixed arrangement of the cards in the magazine (10) in such a way that the cards are rotated at a defined angle smaller than 90° from one another in the magazine (10) individually or in card groups, resulting in protruding surfaces between two successive cards or card groups, wherein the following steps are performed:
- dividing the cards or card groups over two transport paths (71, 72) which each open into the magazine (10) at a defined angle corresponding to the angle of the cards in the magazine (10),
- transporting the cards or card groups by means of the transport paths into the magazine (10).

15. A method for stacking a card or card group delivered by a transport system in a magazine having means (14, 15) for guaranteeing a positionally fixed arrangement of the cards in the magazine (10) in such a way that the cards are rotated at a defined angle smaller than 90° from one another in the magazine (10) individually or in card groups, resulting in protruding surfaces between two successive cards or card groups, wherein the following steps are performed:
- rotating the magazine (10) into the desired position for deposit by an angle smaller than 90°,
- transporting the card (83) or card group by means of the transport system (82) into the magazine.

## Revendications

1. Dispositif pour séparer des cartes, comme par exemple des cartes de crédit ou des cartes pour chéquiers, comprenant au moins un chargeur pour conserver les cartes dans une pile de cartes, un dispositif de prélèvement et un dispositif de retenue, caractérisé en ce que le chargeur (10) comprend des moyens (14, 15) qui garantissent un positionnement fixe des cartes dans le chargeur (10) de manière telle que les cartes soient décalées individuellement ou par groupes de cartes les unes par rapport aux autres dans le chargeur (10) selon un angle défini, qui est inférieur à 90°, de telle façon que des surfaces en saillie s'établissent entre deux cartes ou groupes de cartes successifs, en ce que le dispositif de prélèvement (35, 60) décolle la carte (17) ou le groupe de cartes situé respectivement au-dessus de la pile de cartes (16) selon un axe perpendiculaire à la surface des cartes et en ce que le dispositif de retenue (30, 40, 50) est réalisé de manière à agir sur les surfaces en saillie de la carte ou du groupe de cartes suivant, et ceci au moins lors de la séparation.

2. Dispositif selon la revendication 1, caractérisé en ce que le dispositif de retenue (30) est un obturateur rotatif (32) avec une ouverture (34), l'ouverture (34) correspondant sensiblement aux dimensions de la carte (17).

3. Dispositif selon la revendication 1, caractérisé en ce que le dispositif de retenue (40) est un portique rotatif (42) qui comprend des pieds de portique (43) et qui est fixé sur le dispositif de prélèvement (35, 60).

4. Dispositif selon la revendication 1, caractérisé en ce que le dispositif de retenue (50) comprend deux paires de coulisseaux (52, 53) disposées en diagonale qui sont alternativement approchées ou éloignées au-dessus du chargeur (10).

5. Dispositif selon l'une des revendications 1 à 4, caractérisé en ce que le dispositif de prélèvement se compose d'une tête aspirante (35).

6. Dispositif selon lune des revendications 1 à 4, caractérisé en ce que le dispositif de prélèvement se compose d'une griffe (60).

7. Dispositif selon la revendication 1, caractérisé en ce que le chargeur comprend comme moyen de positionnement fixe des cartes un cadre de fixation (14) à rainures intégrées.

8. Dispositif selon la revendication 1, caractérisé en ce que le chargeur comprend comme moyen de positionnement fixe des cartes une tringlerie de fixation (15).

9. Dispositif selon l'une des revendications 1 à 8, caractérisé en ce qu'un élévateur de cartes (25) et un capteur de hauteur pour la détection du rebord supérieur de la pile de cartes (16) sont prévus, le capteur de hauteur se composant de deux barrières lumineuses, l'une des barrières lumineuses (21, 22) étant placée au-dessus de la hauteur souhaitée de la pile de cartes (16) et l'autre (23, 24) en dessous de celle-ci.

10. Dispositif pour empiler des cartes dans un chargeur, caractérisé en ce que le chargeur (10) comprend des moyens (14, 15) qui garantissent un positionnement fixe des cartes dans le chargeur (10) de manière telle que les cartes soient décalées individuellement ou par groupes de cartes les unes par rapport aux autres dans le chargeur (10) selon un angle défini, qui est inférieur à 90°, de façon que des surfaces en saillie s'établissent entre deux cartes ou groupes de cartes successifs et en ce qu'il est prévu un dispositif de classement pouvant être déplacé selon un axe perpendiculaire à la surface des cartes et pouvant tourner autour de cet axe.

11. Dispositif pour empiler des cartes dans un chargeur, caractérisé en ce que le chargeur (10) comprend des moyens (14, 15) qui garantissent un positionnement fixe des cartes dans le chargeur (10) de manière telle que les cartes soient décalées individuellement ou par groupes de cartes les unes par rapport aux autres dans le chargeur (10) selon un angle défini, qui est inférieur à 90°, de façon que des surfaces en saillie s'établissent entre deux cartes ou groupes de cartes successifs et en ce que deux trajets de transport (71, 72), disposés selon un angle défini par rapport au chargeur (10), qui correspond à l'angle des cartes dans le chargeur (10), sont prévus.

12. Procédé pour séparer des cartes ou des groupes de cartes à partir d'un chargeur qui comprend des moyens (14, 15) qui garantissent un positionnement fixe des cartes dans le chargeur (10) de manière telle que les cartes soient décalées individuellement ou par groupes de cartes les unes par rapport aux autres dans le chargeur (10) selon un angle défini, qui est inférieur à 90°, de façon que des surfaces en saillie s'établissent entre deux cartes ou groupes de cartes successifs, les étapes suivantes étant réalisées avec ce procédé:
- déplacement du dispositif de prélèvement (35, 60) dans une position située au-dessus du chargeur (10),
- déplacement du dispositif de retenue (30, 40, 50) dans une d'au moins deux positions possibles, le dispositif de prélèvement (35, 60) ayant dans cette position un accès libre à la carte (17) ou au groupe de cartes à séparer se trouvant dans le chargeur (10),
- saisie de la carte (17) ou du groupe de cartes au moyen du dispositif de prélèvement (35, 60),
- décollement vertical de la carte (17) ou du groupe de cartes par le dispositif de prélèvement (35, 60),
- retenue de la carte (18) ou du groupe de cartes suivant par une action du dispositif de retenue (30, 40, 50) sur les surfaces en saillie de la carte (18) ou du groupe de cartes suivant,
- transport de la carte (18) ou du groupe de cartes à travers le dispositif de prélèvement (35, 60) vers un dispositif de traitement ultérieur.

13. Procédé pour empiler une carte ou un groupe de cartes dans un chargeur qui comprend des moyens (14, 15) qui garantissent un positionnement fixe des cartes dans le chargeur (10) de manière telle que les cartes soient décalées individuellement ou par groupes de cartes les unes par rapport aux autres dans le chargeur (10) selon un angle défini, qui est inférieur à 90°, de façon que des surfaces en saillie s'établissent entre deux cartes ou groupes de cartes successifs, les étapes suivantes étant réalisées avec ce procédé:
- Saisie de la carte (17) ou du groupe de cartes par un dispositif de classement,
- Transport de la carte (17) ou du groupe de cartes à travers le dispositif de classement jusque dans une position située au-dessus du chargeur (10),
- Rotation de la carte (17) ou du groupe de cartes dans la position de classement souhaitée,
- Classement vertical de la carte (17) ou du groupe de cartes dans le chargeur (10).

14. Procédé pour empiler des cartes ou des groupes de cartes amenés par un système de transport dans un chargeur qui comprend des moyens (14, 15) qui garantissent un positionnement fixe des cartes dans le chargeur (10) de manière telle que les cartes soient décalées individuellement ou par groupes de cartes les unes par rapport aux autres dans le chargeur (10) selon un angle défini, qui est inférieur à 90°, de façon que des surfaces en saillie s'établissent entre deux cartes ou groupes de cartes successifs, les étapes suivantes étant réalisées avec ce procédé:
- répartition des cartes ou des groupes de cartes sur deux trajets de transport (71, 72) qui aboutissent dans le chargeur (10) respectivement selon un angle défini qui correspond à l'angle des cartes dans le chargeur (10),
- transport des cartes ou des groupes de cartes à travers le trajet de transport jusque dans le chargeur (10).

15. Procédé pour empiler une carte ou un groupe de cartes amené par un système de transport dans un chargeur qui comprend des moyens (14, 15) qui garantissent un positionnement fixe des cartes dans le chargeur (10) de manière telle que les cartes soient décalées individuellement ou par groupes de cartes les unes par rapport aux autres dans le chargeur (10) selon un angle défini, qui est inférieur à 90°, de façon que des surfaces en saillie s'établissent entre deux cartes ou groupes de cartes successifs, les étapes suivantes étant réalisées avec ce procédé:
- rotation du chargeur (10) dans la position de classement souhaitée, d'un angle inférieur à 90°,
- transport de la carte (83) ou du groupe de cartes à travers le système de transport (82) jusque dans le chargeur.
